# EUROPÄISCHE PATENTSCHRIFT

(11) **EP 0 784 727 B1**
(45) Veröffentlichungstag und Bekanntmachung des Hinweises auf die Patenterteilung: **23.01.2002**
(21) Anmeldenummer: 95933311.3
(22) Anmeldetag: 05.10.1995
(51) Int. Cl.: E05F 15/00

(54) **STEUERUNG FÜR DEN ANTRIEB EINES ZWISCHEN ZWEI ENDLAGEN HIN- UND HERGEHEND BEWEGBAREN GEGENSTANDES**
CONTROL FOR THE DRIVE OF AN OBJECT MOVABLE TO AND FRO BETWEEN TWO END POSITIONS
COMMANDE D'ENTRAINEMENT D'UN OBJET DEPLACABLE EN VA-ET-VIENT ENTRE DEUX POSITIONS EXTREMES

(30) Priorität: 05.10.1994 DE 4435616; 24.05.1995 DE 19519183
(43) Veröffentlichungstag der Anmeldung: 23.07.1997
(73) Patentinhaber: MARANTEC ANTRIEBS- UND STEUERUNGSTECHNIK GMBH & CO., PRODUKTIONS OHG, 33428 Marienfeld (DE)
(72) Erfinder: HÖRMANN, Michael, D-33813 Oerlinghausen (DE)
(74) Vertreter: Lorenz, Eduard
(86) Internationale Anmeldenummer: DE9501364
(87) Internationale Veröffentlichungsnummer: WO9611321

(56) Entgegenhaltungen:
- EP-A- 0 280 854
- WO-A-87/02090
- DE-A- 2 734 512
- DE-A- 4 200 972

## Beschreibung

Antriebseinrichtungen für einen zwischen zwei Endstellungen hin- und hergehend bewegbaren Gegenstandes sind bekannt, es handelt sich dabei vorzugsweise um elektromotorische Antriebe. Ein Beispiel für einen in vorgenannter Weise bewegbaren Gegenstand ist ein zwischen seiner Schließstellung und seiner Offenstellung bewegbares Torblatt.

Die WO 87/02090 zeigt eine Steuerung für einen Torblattantrieb, bei der entlang des Verfahrweges des Torblattes auftretende Betriebsgrößen, insbesondere eine Antriebskraft des Antriebsmotors, überwacht und mit einem Sollwert verglichen werden, um bei Überschreitung einer vorgegebenen Abweichung den Torantrieb zu stoppen. Um die Überwachung feinfühliger zu gestalten, wird kein über die gesamte Wegstrecke konstanter Sollwert verwendet, sondern der Sollwert in jedem Wegstreckenabschnitt den bei normalen Betrieb auftretenden Betriebsparametern angepaßt.

Aus der EP 0 280 854 ist es bekannt, eine solche Steuerung ohne eine konkretisierte Stellungsabfrage in den Endstellungen des Gegenstandes zu verwirklichen, sondern einen in der Bewegungsstrecke liegenden Referenzpunkt als Bestimmungsgröße für die tatsächliche Torblattstellung heranzuziehen und von da aus mit Hilfe von Zählimpulsen eines dem Torblattantrieb zugeordneten Inkrementgebers mit einer gespeicherten Impulszahl zu vergleichen, die die Endstellungen des Gegenstandes wiedergibt. Die Endstellungen werden dabei im Zuge der Installation des Torblattes in einen Speicher eingegeben. Aufgrund der Durchfahrung des Referenzpunktes erfolgt eine ständige Kontrolle des Istzustandes der Torblattbewegung, so daß eine Korrektur in Richtung der Sollwertsituation im Zuge einer jeden Bewegungsphase möglich ist.

Nach dem Ausführungsbeispiel des vorgenannten Patentes wird aufgrund der Lage des Referenzpunktes zwischen den Endlagen eines Torblattes dessen Bewegung in beiden Bewegungsrichtungen überwacht.

Der Erfindung liegt die Aufgabe zugrunde, die aus dem Ausführungsbeispiel des vorgenannten Patentes bekannte Steuerung, die ohne konkretisierte Endschalter-Ausbildung auskommt, noch weiter zu vereinfachen und insbesondere für die Einstellung durch den Torbenutzer selbst handhabbar zu gestalten.

Dies geschieht prinzipiell dadurch, daß der Referenzpunkt in den Endbereich einer der Bewegungsphasen verlegt wird, am Beispiel eines Tores in den Bereich der Öffnungsstellung des Torblattes. Dies hat zur Folge, daß eine Überprüfung Istwert/Sollwert aufgrund der Kürze bzw. des Wegfalles eines Restweges bis zur endgültigen Offenstellung auf einen Bewegungszyklus - Bewegung von der Öffnungsstellung in die Schließstellung und zurück - beschränkt werden kann und daß spezifische, im Übergang des Torblattes in die Öffnungsstellung auftretende Betriebsparameter für die Definition des Referenzpunktes herangezogen werden können.

Hierzu eignet sich insbesondere die Überwachung der elektrischen Speisegrößen - Speisestrom - des Antriebsmotors, die gegebenenfalls ohnehin bereits im Sinne einer Überlastsicherung, beispielsweise im Sinne eines Unfallschutzes, überwacht werden.

Im konkreten Fall bedeutet dies, daß das von einem elektrischen Antriebsmotor in die Öffnungsstellung bewegte Torblatt aufgrund des Anlaufes gegen einen die Öffnungsstellung definierenden Widerstand einen Überstrom erzeugt, der zur Abschaltung des Antriebes führt. Der damit gewonnene Referenzpunkt - Überstromschwelle - markiert zugleich die Öffnungsstellung und setzt einen Zähler, der von einem mit der Torblattbewegung betriebenen Inkrementgeber gespeist wird, auf einen bestimmten Wert. Im Zuge der Schließbewegung schaltet der Inkrementgeber den Zähler weiter und vergleicht seinen Ausgang mit dem Ausgangs eines Speichers, in den bei Inbetriebnahme des Tores ein Wert eingespeichert wurde, der dem Schließzustand des Torblattes entspricht.

Bei Inbetriebnahme wird demnach wie folgt vorgegangen: Das Torblatt wird nach Montage aus der Schließstellung oder einer Zischenstellung in die Öffnungsstellung verfahren. In der Öffnungsstellung läuft das Torbatt derart gegen einen Widerstand an, daß ein Überlastzustand des Motors eintritt, der als Referenzpunkt für die Öffnungsstellung und als Abschaltsignal ausgewertet wird. Danach wird das Torblatt von Hand gesteuert - beispielsweise Totmannbetrieb - in die Schließstellung verfahren. Die dabei von einem Inkrementgeber des Antriebsaggregates wegstreckenabhängig abgegebenen Impulse dienen zur Eingabe einer Impulsreihe in eine Impulsspeichereinrichtung, so daß diese den Weg zwischen der Öffnungsstellung und der Schließstellung beschreibt. Damit ist das Tor betriebsbereit.

Wird das Tor beim nächsten entsprechenden Befehl von der Schließstellung in die Öffnungsstellung überführt, so läuft es dort gegen einen den Widerstand bildenden Anschlag an. Der dadurch eintretende Überlastzustand für den Antriebsmotor wird als Referenzpunkt und Motorabschaltepunkt ausgewertet, derart, daß der die Impulsreihe für die Fahrt in die Schließstellung enthaltende Speicher auf den Beginn dieser Impulsreihe geschaltet wird. Nach dem nächstfolgenden Schließsignal werden die vom Inkrementgeber gelieferten wegstreckenabhängigen Impulse gezählt und bei Erreichen der Koinzidenz mit der Impulsreihe des Speichers zur Stillsetzung des Antriebes ausgewertet, weil sich nunmehr das Torblatt in der Schließstellung befindet.

Treten also im Zuge eines Bewegungszyklus Verschiebungen auf, so werden sie auf diese Weise korrigiert, d.h. die Steuerungseinrichtung wird nach jedem Betriebszyklus auf den im Zuge der Montage eingestellten Anfangszustand zurückgeführt.

Die vorstehenden Ausführungen gelten für entsprechend stabile Anschlagverhältnisse in der Offenstellung des Torblattes. Man kann jedoch auch, insbesondere durch Einsatz eines Gleichstrommotors, zumindest vor Erreichen der Offenstellung die Bewegung des Torblattes über den letzten Streckenabschnitt hinweg herabsetzen, so daß der Anlauf gegen den Anschlag dann "zarter" erfolgt. In diesem Falle kann man bei Bewegung aus der Schließ- in die Offenstellung die gespeicherte Impulsreihe rückwärts abzählen, bis man eine den Beginn dieses Streckenabschnittes entsprechende Speicherstelle erreicht. Danach werden über den Streckenabschnitt hinweg die restlichen Impulse der Impulsreihe bis in die Offenstellung hinein nicht mehr wahrgenommen, um das Anfahren an den Anschlag und damit die erneute Synchronisierung mit dem Impulsreihenbeginn und der Offenstellung zu sichern.

In einem Endabschnitt - oberes Drittel vor der Offenstellung - kann die über den Belastungszustand des Antriebmotors operierende Unfallschutzfunktion ausgeschaltet werden, um den eindeuteigen Anlauf gegen den Anschlag zur Anzeige der Endstellung - Offenstellung - sicherzustellen.

Wichtig ist demnach, daß streng nach Vergleich mit einer eingespeicherten Impulsreihe nur von der Offenstellung ausgehend in die Schließstellung verfahren wird, während die Offenstellung immer erneut durch den zugeordneten Anschlag markiert wird.

Der Anschlag ist vorzugsweise in Längsrichtung der dem Antrieb zugeordneten Führungsbahn für einen Schlitten, der mit dem Torblatt verbunden ist, in verschiedenen Stellungen festlegbar, insbesondere an der die Führungsbahn regelmäßig bildenden Führungsschiene. Nach dem im Zuge der Installation bzw. der Einstellung der Steuerung das Torblatt in die Offenstellung verfahren wurde, wiederum vorzugsweise durch Totmannbetrieb, wird der Anschlag an diese Torblattoffenstellung bündig herangeführt, und zwar vorzugsweise an den Schlitten oder ein mit diesem dauerhaft verbundenen Teil, so daß bei Ausklinken des Torblattes bzw. des mit diesem verbundenen Schlittens von dem Abtriebsglied - Endloskette, Endlosriemen, Zahngliederstab etc. - des Antriebes die Anschlagsituation zwischen Schlitten und Anschlag nicht ändert, das Tor also von Hand ebenfalls nur in die vorgegebene Offenstellung überführt werden kann. Bei Wiedereinklinken zwischen Schlitten und Abtriebsglied in dieser Offenstellung bleibt die Richtigkeit der eingespeicherten Impulsreihe erhalten.

Grundsätzlich ist es möglich, einen elektrischen Wechselstrommotor für den Torblattantrieb zu verwenden, der unter Vermeidung aufwendiger Drehzahlsteuerungen mit der Betriebsdrehzahl betrieben wird. In diesem Falle empfiehlt es sich, in der Öffnungsstellung einen Puffer vorzusehen, um Beschädigungen aufgrund der gespeicherten kinetischen Energien zu vermeiden. Bei Verwendung eines Gleichstrommotors ist es steuerungstechnisch einfach, diesen in der Einrichtphase und später während des Betriebs bei Annäherung des Torblattes in dessen Endstellungen mit gegenüber der Betriebsdrehzahl herabgesetzter Drehzahl zu betreiben. Die dadurch bei Übergang in die Öffnungsstellung erreichte Bewegungsgröße des Torblattes kann derart gering gehalten werden, daß sich ein gedämpftes Abfangen des Torblattes (Puffer) erübrigt und das Tor gegen einen Anschlag läuft.

In einer Variante kann der Anschlag gezielt mit einer Dämpfungsstrecke versehen werden, zwischen deren Enden der Referenzpunkt liegt, der durch zunehmendes Abbremsen des Antriebsmotors aus dessen Speisedaten gewonnen werden kann. Der Referenzpunkt liegt dann nicht exakt in der Offenstellung des Torblattes, weil der Antriebsmotor noch über eine Reststrecke des Dämpfungsweges weiter betrieben wird, was durch eine entsprechend geringzahlige Impulsreihe in der Impulsspeichereinrichtung steuertechnisch exakt ausführbar ist. Diese Impulszahl kann man der vorerwähnten Impulsreihe vorschalten oder von deren Beginn abziehen. In jedem Falle läßt sich durch den Referenzpunkt eine exakte Synchronisierung zwischen der erreichten Stellung und der Speicherstelle der Impulsreihe sicherstellen, die in Schließrichtung gesehen eine exakte Übereinstimmung mit der Bewegungsstrecke zwischen der Offenstellung und der Schließstellung und dabei durchgeführtem Vergleich zwischen abgegebener Impulszahl des Inkrementgebers und dem Speicherinhalt sicherstellt. Die Dämpfungsstrecke ist vorzugsweise progressiv, insbesondere durch eine Federanordnung geknickt ausgebildet, was die Kraft-Weg-Charakteristik in Richtung der Offenstellung gesehen angeht. Eine solche Charakteristik kann man durch Zusammenschaltung von Federn, insbesondere durch Parallelschaltung zweier koaxialer Schraubenfedern unterschiedlicher Länge, einfach aufbauen.

Das hier geschilderte spezifische Vorgehen bei der Inbetriebnahme und der anschließenden Steuerung der Torblattbewegungen zeichnet sich dadurch aus, daß nur die Öffnungsstellung des Torblattes zur Referenzpunktgewinnung dient, während die Bewegung in die Schließstellung nach der in Speicher vorgegebenen Inkrementpulszahl bestimmt und gesteuert ist.

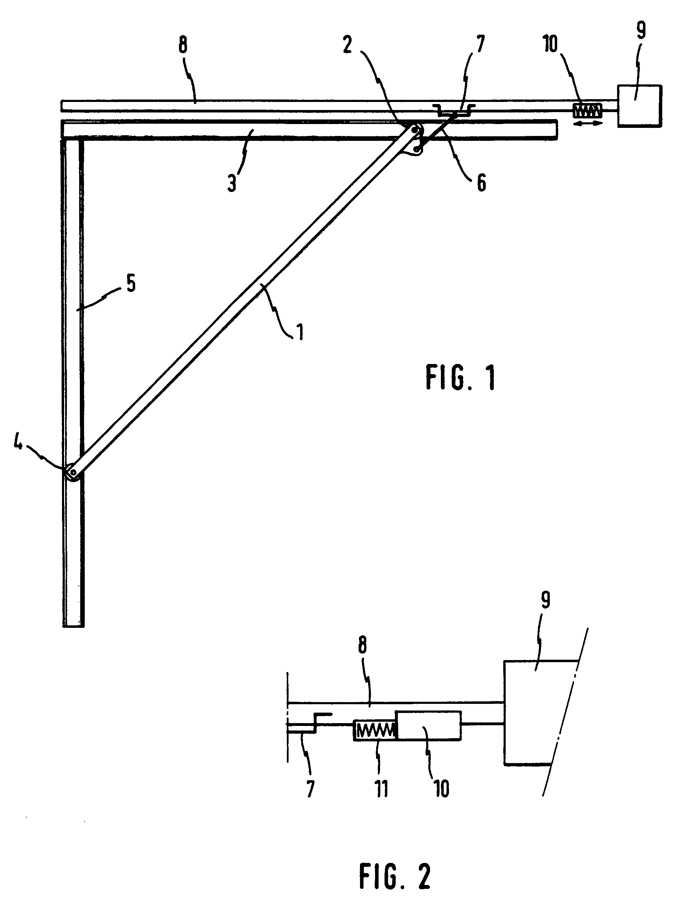

Ein Ausführungsbeispiel ist aus den beiliegenden Zeichnungen ersichtlich, in denen Figur 1 in grob schematisierter Form ein Kipptorblatt mit einem Antrieb nebst Anschlag an der Führungsschiene und Figur 2 eine Abwandlung des Anschlages zeigt.

Das Torblatt 1 läuft mit einem in seinem oberen Kantenbereich angeordneten Laufrollenpaar 2 in horizontalen Laufschienen 3 und mit in seinem unteren Kantenbereich angeordneten Laufrollen 4 in vertikalen Laufschienen 5; Tore dieser Bauart sind bekannt. Das Torblatt ist über einen Mitnehmer 6 an einen Schlitten 7 angeschlossen, der in einer Führungsschiene 8 mittels einer Rollenkette, eines Zahnriemens, eines Reibriemens oder eines zug- und druckbelastbaren Stranges in bekannter Weise hin- und hergehend entlang der Führungsschiene bewegbar ist, und zwar mit Hilfe eines Antriebsaggregates 9, das im vorliegenden Falle einen Gleich- oder auch Wechselstrommotor aufweist. Auch derartige Antriebseinrichtungen sind im Zusammenhang mit Torblättern bekannt.

An der Führungsschiene 8 ist eine Anschlageinrichtung 10 vorgesehen, gegen die der Schlitten 7 in der Offenstellung des Torblattes 1 anläuft. Die Anschlageinrichtung ist hinsichtlich ihrer Lage an der Führungsschiene in verschiedenen Abständen vom Aggregat 9 gestuft oder ungestuft festlegbar. Im Zuge der Einstellung der Betriebsbereitschaft nach der Montage des Torblattes wird dieses zunächst von Hand in die gewollte Öffnungsstellung überführt, worauf die Anschlageinrichtung 10 entlang der Führungsschiene 8 bis zum Anschlag an dem Schlitten verschoben und in dieser Stellung festgelegt wird. Nach dieser Definition der Offenstellung wird das Torblatt unter Abfrage der von dem im Antriebsaggregrat vorgesehenen Inkrementvorrichtung bewegungsstreckenabhängig abgegebenen Impulse von Hand in den Schließzustand überführt, die so erreichte Impulszahl wird abgespeichert, so daß auch diese Schließstellung wie die Offenstellung speichermäßig definiert ist. Die somit erreichte Betriebsbereitschaft geht also von der Vorstellung aus, daß im Zuge der nunmehr erfolgenden, bzw. ferngesteuerten Überführung des Torblattes in die Offenstellung der Schlitten 8 gegen die Anschlageinrichtung 10 anläuft, wodurch aufgrund der damit ausgelösten Überlastung des Antriebsmotors dieser abgeschaltet und die erneute Einspeicherung der Offenstellung als Referenzpunkt erfolgt. Es wird demnach im Zuge eines jeden aufeinander folgenden Zyklus Offenstellung, Schließstellung - definiert durch zuvor abgespeicherte Impulsreihe - Offenstellung jedesmal eine erneute Festlegung des Anfangs der Zählimpulsreihe erzielt, so daß ein wie auch immer gearteter Fehler, der innerhalb eines Bewegungszyklus hinsichtlich der zugeordneten Impulszahl auftreten könnte, korrigiert wird. Soweit ein Überlastzustand des Antriebsmotors auch als Auslösekriterium für eine Unfallschutzeinrichtung dient, kann diese Schutzfunktion für einen Rest der Wegstrecke bis zum Anschlag unterdrückt werden, um einen absolut sicheren Einlauf des Torblattes in die Offenstellung und damit des Schlittens an der Anschlageinrichtung zu gewährleisten.

Sofern die Festigkeit der Konstruktion, die Betriebsgeschwindigkeit des Torblattes und der gleichen Parameter mehr dies zulassen, kann der Schlitten mit normaler Betriebsgeschwindigkeit gegen den Anschlag anlaufen, was man insbesondere bei Verwendung eines Wechselstrommotors überlegen wird. In bevorzugter Ausführung wird man die Geschwindigkeit der Torblattbewegung vor Einlauf in die Endstellungen, also insbesondere des Schlittens an dem Anschlag gegenüber der Betriebsgeschwindigkeit herabsetzen, was sich insbesondere bei Verwendung von Gleichstrommotoren anbietet.

Es kann im Sinne der vorstehenden Ausführungen erforderlich sein, zwischen den Schlitten und der Anschlageinrichtungen eine Puffer- bzw. Dämpfungseinrichtung anzuordnen.

Eine Variante der vorstehenden Ausführung zeigt Figur 2, dergestalt, daß die dortige Anschlageinrichtung mit einer Federeinrichtung 11 versehen ist, gegen die der Schlitten 7 entlang der Führungsschiene 8 im Zuge der Überführung des Torblattes 1 in die Offenstellung zunächst anläuft und diese zusammendrückt, bis die Offenstellung erreicht ist. Der durch die Federeinrichtung auftretenden Widerstand gegen die Schlittenbewegung führt zu einem entsprechenden Anstieg der Motorbelastung - Anstieg des aufgenommenen Speisestroms -, was zu einer Schwellwertbildung vor Erreichen der Offenstellung ausgenutzt werden kann. Man kann die Bewegungsstrecke von der Schwellwertbildung bis zur entgültigen Offenstellung aus gesehen mit einer fixen Streckenimpulszahl versehen und den Ort der Schwellwertbildung als Referenzpunkt definieren, der die Impulsreihe entprechend markiert. Auch auf diese Weise ist die im Zusammenhang mit Figur 1 geschilderte Korrektur pro Bewegungszyklus in gleicher Weise möglich. Die Federeinrichtung kann - z. B. durch parallel geschaltete Druckfedern unterschiedlicher Länge - eine geknickte Kennlinie oder der gleichen nichtlineare Gestalt aufweisen, so daß sich die Schwellwertbildung und damit die Festlegung des Referenzpunktes genauer gestalten läßt.

## Patentansprüche

1. Steuerungsanlage für den elektromotorischen Antrieb (9) eines zwischen zwei Endstellungen hin- und hergehend bewegbaren Gegenstandes (1), insbesondere eines ein- oder mehrteiligen Torblattes, mit einem motorisch angetriebenen, eine Translationsstrecke aufweisenden Abtriebsglied, beispielsweise Kette, Riemen, Zahngliederstab gemäß EP 0 165 497 etc., an das ein entlang einer Führungsbahn bewegbarer Schlitten (7) angeschlossen ist, der mit dem Gegenstand (1) in Verbindung steht, dessen beide Endstellungen und gegebenenfalls Zwischenstellungen steuerungstechnisch erfaßt sind und der Bewegungsablauf mittels eines dem Antriebsmotor zugeordneten Inkrementgebers zumindest streckenabhängig erfaßt wiedergegeben wird,
**gekennzeichnet durch**,
eine dem Antrieb zugeordnete Anschlageinrichtung (10), die die eine Endstellung des Gegenstandes (1), insbesondere eine Offenstellung des Torblattes, markiert und gegen die der Gegenstand (1) in diese Endstellung einen Referenzpunkt bildend anläuft, wodurch ein Steuerteil des Antriebsmotors (9) ein Abschaltsignal bildet und eine Impulsspeichereinrichtung auf einen bestimmten Wert gesetzt wird, der den Beginn einer Impulsreihe darstellt, die die Bewegungsstrecke des Gegenstandes (1) zwischen den Endstellungen wiedergibt und die mit der bei Bewegung des Gegenstandes (1) in die entgegengesetzte Endstellung, insbesondere eine Schließstellung des Torblattes, mit der im Zuge dieses Bewegungsablaufes von dem Inkrementgeber abgegebenen Impulszahl auf Koinzidenz überprüft wird, bei deren Erreichen wiederum ein Abschaltsignal für den Antriebsmotor (9) erzeugt wird, wobei die Impulsreihe im Zuge der Installation des Gegenstandes **dadurch** in die Impulsspeichereinrichtung eingebbar ist, daß nach Verfahren des Gegenstandes (1) gesteuert von Hand in die die Anschlageinrichtung aufweisende Endstellung von dieser ausgehend der Beginn der Impulsreihe markiert wird, worauf der Gegenstand (1) in die entgegengesetzte Endstellung von Hand gesteuert verfahren und die dabei von dem Inkrementgeber erzeugte Impulszahl als streckennachbildende Impulsreihe in die Impulsspeichereinrichtung eingegeben wird.

2. Anlage nach Anspruch 1, **dadurch gekennzeichnet, daß** die Anschlageinrichtung (10) entlang der Führungsbahn für den Schlitten (7) verstellbar ausgebildet ist, insbesondere an einer die Führungsbahn bildenden Führungsschiene (8) in verschiedenen Verschiebestellungen gestuft oder ungestuft versetzt festlegbar ist, und daß diese Einstellung der Anschlageinrichtung (10) bei Installation des Gegenstandes (1) nach dessen gesteuerter Überführung in die gewünschte zugeordnete Endlage des Gegenstandes (1) in Anschlagstellung zur Bildung eines einstellbaren Referenzpunktes für die Bewegungsstreckenbestimmung erfolgt.

3. Anlage nach Anspruch 1 oder 2, **dadurch gekennzeichnet, daß** die Anschlageinrichtung (10) auf einen Anschlag mit dem Schlitten (7) ausgebildet ist.

4. Anlage nach einem der Ansprüche 1 bis 3, **dadurch gekennzeichnet, daß** die Anschlageinrichtung (10) einen Puffer (11) aufweist, in dessen Dämpfungsverformungsstrecke der Referenzpunkt liegt.

5. Anlage nach Anspruch 4, **dadurch gekennzeichnet, daß** die Dämpfungsverformungsstrecke hinsichtlich ihrer Kraft-Weg-Kennlinie eine progressive steigende Tendenz aufweist, insbesondere in Gestalt einer geknickten Federkennlinie, beispielsweise durch Parallelanordnung zweier ungleich langer Federn.

6. Anlage nach einem der Ansprüche 1 bis 5, **dadurch gekennzeichnet, daß** der Referenzpunkt ein eine bestimmte Impulsreihenzählstelle der Impulsspeichereinrichtung ansteuemdes Setzsignal bildet, welche Zählstelle bei starrem Anschlag der Beginn der Impulsreihe und bei gedämpft ausgebildetem Anschlag eine Zählstelle einige Impulse vor Erreichen der zugeordneten Endstellung ist.

7. Anlage nach einem der Ansprüche 1 bis 6, **dadurch gekennzeichnet, daß** der Antrieb (9) einen Wechselstrommotor aufweist.

8. Anlage nach einem der Ansprüche 1 bis 7, **dadurch gekennzeichnet, daß** der Antrieb (9) vor zumindest der die Anschlageinrichtung (10) aufweisenden Endstellung einen Streckenabschnitt verlangsamter Geschwindigkeit durchläuft.

9. Anlage nach Anspruch 8, **dadurch gekennzeichnet, daß** bei Bewegung gegen die die Anschlageinrichtung (10) aufweisenden Endstellung die gespeicherte Impulsreihe soweit rückwärts abgefragt wird, bis der dieser Endstellung zugewandte Streckenabschnitt verlangsamter Geschwindigkeit erreicht ist.

10. Anlage nach einem der Ansprüche 1 bis 9, **dadurch gekennzeichnet, daß** die bei mechanischem Anlauf an die Anschlageinrichtung (10) auftretende Leistungsaufnahmeänderung, insbesondere Speisestromänderung, des Antriebsmotors zur Bildung des Referenzpunktes bzw. des Anschaltsignales ausgewertet wird.

11. Anlage nach einem der Ansprüche 1 bis 10, **dadurch gekennzeichnet, daß** in einem Endabschnitt der Bewegungsstrecke des Gegenstandes vor dem Anschlag (10), insbesondere in einem oberen Drittel vor der Offenstellung des Torblattes eine über den Belastungszustand des Antriebsmotors gesteuerte Unfallverhütungsfunktion unterdrückt wird.

## Claims

1. Control system for the electromotive drive (9) of an object (1) which can be moved to and fro between two end positions, in particular a one-part or multipart door leaf, with a driven element which is driven by motor and has a translation path, for example a chain, belt, tooth link bar according to EP 0 165 497 etc., to which there is connected a carriage (7) which can move along a guideway and is in connection with the object (1), the two end positions and possibly intermediate positions of which are sensed by control equipment and the sequence of movement is reproduced by means of an incremental encoder assigned to the drive motor after being sensed path-dependently, **characterized by** a stop device (10), which is assigned to the drive and marks the one end position of the object (1), in particular an open position of the door leaf, and against which the object (1) runs in this end position, forming a reference point, whereby a control part of the drive motor (9) forms a switching-off signal and a pulse memory device is set to a specific value, which represents the beginning of a series of pulses which reproduces the path of movement of the object (1) between the end positions and which is checked for coincidence with the number of pulses emitted by the incremental encoder when the object (1) moves into the opposite end position, in particular a closed position of the door leaf, during this sequence of movements, on reaching which number a switching-off signal is in turn generated for the drive motor (9), it being possible to enter the series of pulses into the pulse memory device during the installation of the object by marking the beginning of the series of pulses on the basis of the end position having the stop device after moving the object (1) into the said end position under manual control, whereupon the object (1) is moved under manual control into the opposite end position and the number of pulses generated by the incremental encoder as this happens is entered into the pulse memory device as the path-simulating series of pulses.

2. System according to Claim 1, **characterized in that** the stop device (10) is designed such that it can be adjusted along the guideway for the carriage (7), in particular can be fixed in various displacement positions, offset in a stepped or unstepped manner, in particular on a guide rail (8) forming the guideway, and **in that** this setting of the stop device (10) takes place when the object (1) is installed, after its controlled transfer into the desired assigned end position of the object (1) in the stop position, to form an adjustable reference point for the determination of the path of movement.

3. System according to Claim 1 or 2, **characterized in that** the stop device (10) is formed on the basis of being struck with the carriage (7).

4. System according to one of Claims 1 to 3, **characterized in that** the stop device (10) has a buffer (11), in the damping deformation path of which the reference point lies.

5. System according to Claim 4, **characterized in that** the damping deformation path has with regard to its force-displacement characteristic a progressive rising tendency, in particular in the form of a kinked spring characteristic, for example by parallel arrangement of two springs of unequal length.

6. System according to one of Claims 1 to 5, **characterized in that** the reference point forms a setting signal which drives a specific pulse-series counting point of the pulse memory device, which counting point is the beginning of the series of pulses in the case of a rigid stop and is a counting point a few pulses before reaching the assigned end position in the case of a damped stop.

7. System according to one of Claims 1 to 6, **characterized in that** the drive (9) is an a.c. motor.

8. System according to one of Claims 1 to 7, **characterized in that** the drive (9) passes through a path section of reduced speed before at least the end position having the stop device (10).

9. System according to Claim 8, **characterized in that**, in the case of movement towards the end position having the stop device (10), the stored series of pulses is interrogated back until the path section of reduced speed facing this end position is reached.

10. System according to one of Claims 1 to 9, **characterized in that** the change in power consumption, in particular change in current, of the drive motor occurring when the stop device (10) is mechanically run into is evaluated to form the reference point or the switching-on signal.

11. System according to one of Claims 1 to 10, **characterized in that**, in an end portion of the path of movement of the object before the stop (10), in particular in an upper third before the open position of the door leaf, an accident prevention function controlled via the loading state of the drive motor is suppressed.

## Revendications

1. Installation de commande pour l'entraînement électromoteur (9) d'un objet (1) déplaçable en va-et-vient entre deux positions extrêmes, notamment d'un vantail de porte en une ou plusieurs parties, avec un organe mené, entraîné par moteur, présentant un trajet de translation, par exemple une chaîne, une courroie, une tige à éléments dentés selon le EP 0 165 497 etc., auquel est raccordé un chariot (7) déplaçable le long d'une voie de guidage qui est en liaison avec l'objet (1), dont les deux positions extrêmes et le cas échéant positions intermédiaires sont détectées par la technique de commande et où le déroulement du déplacement est reproduit, en étant détecté au moins en fonction du trajet au moyen d'un capteur d'incréments associé au moteur d'entraînement, **caractérisée par** une installation de butée (10) associée à l'entraînement qui marque une position extrême de l'objet (1), notamment une position d'ouverture du vantail de porte et contre laquelle vient l'objet (1), en formant dans cette position extrême un point de référence, par quoi une partie de commande du moteur d'entraînement (9) forme un signal de coupure, et une installation de stockage d'impulsions est établie à une valeur déterminée qui représente le début d'une série d'impulsions qui reproduit le trajet de déplacement de l'objet (1) entre les positions extrêmes et dont la coïncidence avec le nombre d'impulsions émis par le capteur d'incréments lors du déplacement de l'objet (1) dans la position extrême opposée, notamment une position de fermeture du vantail de porte, au cours de ce déroulement de déplacement, est vérifiée, lors de l'atteinte de laquelle est produit de nouveau un signal de coupure pour le moteur d'entraînement (9), où la série d'impulsions, au cours de l'installation de l'objet, peut être entrée dans l'installation de stockage d'impulsions par le fait qu'après le déplacement de l'objet (1). commandé à la main, dans la position d'extrémité présentant l'installation de butée, en partant de celle-ci, le début de la série d'impulsions est marquée, à la suite de quoi l'objet (1) est déplacé dans la position extrême opposée par une commande manuelle et, ce faisant, le nombre d'impulsions produit par le capteur d'incréments est entré comme série d'impulsions reproduisant le trajet dans l'installation de stockage d'impulsions.

2. Installation selon la revendication 1, **caractérisé en ce que** l'installation de butée (10) est réalisée d'une manière déplaçable le long de la voie de guidage du chariot (7), peut être fixée selon un décalage étagé ou non étagé à un rail de guidage (8) formant la voie de guidage dans différentes positions de déplacement, et **en ce que** ce réglage de l'installation de butée (10) a lieu lors de l'installation de l'objet (1) après l'amenée commandée de celui-ci dans la position extrême associée souhaitée de l'objet (1) dans la position de butée pour former un point de référence réglable pour la définition du trajet de déplacement.

3. Installation selon la revendication 1 ou 2, **caractérisée en ce que** l'installation de butée (10) est réalisée pour une butée avec le chariot (7).

4. Installation selon l'une des revendications 1 à 3, **caractérisée en ce que** l'installation de butée (10) présente un tampon (11) dans le trajet de déformation d'amortissement duquel se situe le point de référence.

5. Installation selon la revendication 4, **caractérisée en ce que** le trajet de déformation d'amortissement, en ce qui concerne sa courbe caractéristique de force-chemin, a une tendance augmentant progressivement, notamment sous la forme d'une courbe caractéristique de ressort à inflexion, par exemple par l'agencement parallèle de deux ressorts d'une longueur inégale.

6. Installation selon l'une des revendications 1 à 5, **caractérisée en ce que** le point de référence forme un signal de positionnement commandant un emplacement de comptage déterminé de la rangée d'impulsions de l'installation de stockage d'impulsions, l'emplacement de comptage, lors d'une butée rigide, constitue le début de la rangée d'impulsions et lors d'une butée réalisée d'une manière amortie, un emplacement de comptage se trouvant à quelques impulsions avant d'atteindre la position extrême associée.

7. Installation selon l'une des revendications 1 à 6, **caractérisée en ce que** l'entraînement (9) présente un moteur à courant alternatif.

8. Installation selon l'une des revendications 1 à 7, **caractérisée en ce que** l'entraînement (9), devant au moins la position extrême présentant l'installation de butée (10), parcourt un tronçon de trajet d'une vitesse plus lente.

9. Installation selon la revendication 8, **caractérisée en ce que** lors d'un déplacement contre la position extrême présentant l'installation de butée (10), la série d'impulsions stockée est interrogée en arrière jusqu'à ce que le tronçon de trajet orienté vers cette position d'extrémité d'une vitesse plus lente soit atteint.

10. Installation selon l'une des revendications 1 à 9, **caractérisée en ce que** la modification de la puissance absorbée produite lors d'une application mécanique à l'installation de butée (10), notamment une modification du courant d'alimentation du moteur d'entraînement est évaluée pour former le point de référence respectivement le signal de mise en service.

11. Installation selon l'une des revendications 1 à 10, **caractérisée en ce que** dans un tronçon d'extrémité du trajet de déplacement de l'objet devant la butée (10), notamment dans un tiers supérieur avant la position d'ouverture du vantail de porte, une fonction empêchant des accidents, commandée par l'état de charge du moteur d'entraînement, est supprimée.
